# EUROPEAN PATENT APPLICATION

(11) **EP 1 327 789 A2**
(43) Date of publication of application: **16.07.2003**
(21) Application number: 03250154.6
(22) Date of filing: 10.01.2003
(51) Int. Cl.: F16D 3/38, F16D 3/40

(54) **Universal joint**

(30) Priority: 14.01.2002 GB 0200748
(71) Applicant: Smiths Wolverhampton Limited, Wolverhampton WV9 5EW (GB)
(72) Inventor: Matthews, Timothy Robert, Penkridge, Staffordshire ST19 5TD (GB)
(74) Representative: Wardle, Callum Tarn

(57) **Abstract**

A universal joint comprises a first attachment (2) element having first (10) and second (12) engagement regions, a second attachment element (4) having third and fourth engagement regions and a cruciform element (6). The cruciform element engages with the first to fourth engagement regions and has a bearing material (30) is fixed thereon such that relative movement occurs at the interface between the radially outermost surface of the bearing material and the co-pending parts of the engagement regions.

## Description

The present invention relates to a universal joint, and is particularly applicable to low maintenance universal joints using bearing materials having a low thermal conductivity.

Universal joints generally known in the art comprise first and second attachment elements connected to one another by way of an intermediate cruciform member. The cruciform member is generally rotationally engaged with engagement regions of the attachment elements such that relative rotation may occur between each of the attachment elements and the cruciform member. This allows rotational motion to be transmitted from a first rotating element to a second rotating element interconnected by the universal joint where the axes of rotation may not be, or remain, coaxial.

In prior art arrangements a bearing material is generally provided that is either free to rotate with respect to both the cruciform and the engagement regions, or is fixed to the engagement regions. This means that relative motion can occur at the interface between the cruciform element and the bearing material, giving rise to heating of the cruciform element. However, where the bearing material is synthetic, it often exhibits low thermal conductivity. This means that there is no thermal path for the cruciform element to lose its heat, and consequently the cruciform element can become thermally stressed. This in turn can give rise to a shorter service life and can create unnecessary loads on the bearings due to thermal expansion.

According to the present invention there is provided a universal joint comprising:
a first attachment element having first and second engagement regions;
a second attachment element having third and fourth engagement regions; and
a cruciform element engaging with the first to fourth engagement regions, and in which a bearing material is fixed on the cruciform such that relative movement occurs at the interface between the radially outermost surface of the bearing material and the co-operating parts of the engagement regions.

It is thus possible to provide a universal joint in which the bearing material is fixed to the cruciform, thereby ensuring that relative motion occurs at the interface between the bearing material and the engagement regions.

This modification to the design confers several advantages:
1) Any heat resulting from frictional forces is generated over a larger contact area.
2) The cruciform is thermally insulated from the region where the heat is created by virtue of the bearing material.
3) Heat generated at the interface with the engagement regions is conducted away via the engagement regions to the attachment elements.
4) The bearing material, being formed on the cruciform element rather than on an attachment element, is better supported.
5) As only a single item, the cruciform element, requires processing to fix the bearing material thereon, processing time and costs are reduced.

Preferably the attachment elements are in the form of plates, flanges, webs or the like having attachment regions defining axially aligned passages.

The attachment regions may form bearing caps which serve to enclose the bearing material.

Advantageously the bearing material is a low friction and/or low maintenance material which substantially fills the volume defined by the outer surface of one of the arms of the cruciform element and the inner surface of the attachment region. Thus the bearing is solid. That is there are no roller bearings or ball bearings. This gives rise to a universal joint which is substantially maintenance free throughout its operating life.

Preferably the bearing material extends over an end face of each arm of the cruciform in order to provide an end face thrust bearing.

According to a second aspect of the present invention there is provided a joint comprising a first element rotatably supported in a recess defined by a second element, wherein a bearing material is fixed to the first element, such that relative motion occurs between the bearing material and the second element.

The present invention will further be described, by way of example, with reference to the accompanying drawings, in which:
Figure 1 is a perspective view of a universal joint;
Figure 2 is a cross section of a cruciform constituting an embodiment of the present invention;
Figure 3 shows a cross section through one possible embodiment of an arm of a cruciform in accordance with the present invention;
Figure 4 shows a cross section through an alternative embodiment of an arm of a cruciform in accordance with the present invention; and
Figure 5 compares and contrasts the present invention with equivalent prior art arrangements.

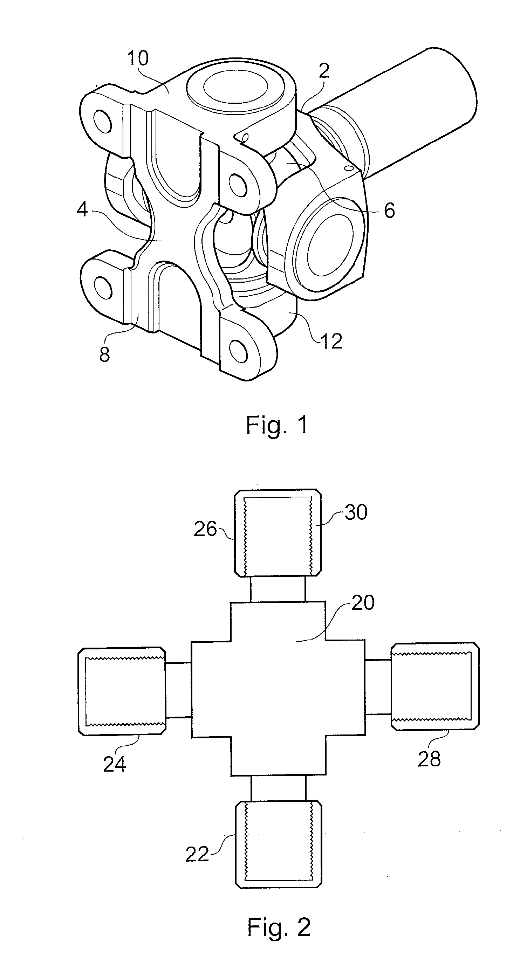

A universal joint is schematically illustrated in Figure 1. The universal joint allows rotational movement to be transmitted between a first attachment element 2 and a second attachment element, generally indicated 4, by way of an intermediate cruciform member 6 which is part visible in Figure 1. In general each of the first and second attachment elements comprises a backing plate or similar support member 8 which has first and second engagement regions 10 and 12 forming axially aligned cup shaped recesses which, in use, engage opposing limbs of the cruciform element 6.

Each of the attachment elements allows relative rotation to occur between it and the cruciform 6. This in turn allows rotational motion to be transmitted from a first rotating element to a second rotating element interconnected by the universal joint where the axes of rotation may not remain coaxial.

Figure 2 schematically illustrates a cruciform in accordance with the present invention. In general, the cruciform comprises a central portion 20 from which four arms 22, 24, 26 and 28 extend. In general the cruciform exhibits four fold rotational symmetry. Each arm is preferably integrally formed with the cruciform and, in use, extends into a respective one of the engagement regions within the universal joint. The joint may be subjected to high loads or high rotational rates, and consequently it is necessary to provide a bearing between the cruciform element and the first and second attachment elements. In an embodiment of the present invention, this is provided by a solid low friction material which is bonded to the cruciform 20. Thus, traditional bearings are avoided in this design.

The cruciform 20 may be cast, molded, forged or machined from an appropriate material. Indeed, the surface finish of the cruciform may be deliberately made rough in order to provide enhanced bonding between the bearing material 30 applied to the limbs of the cruciform and the material of the cruciform itself. The bearing material 30 may be applied by bonding, spraying or molding it on to the cruciform and then curing the material in order to harden it.

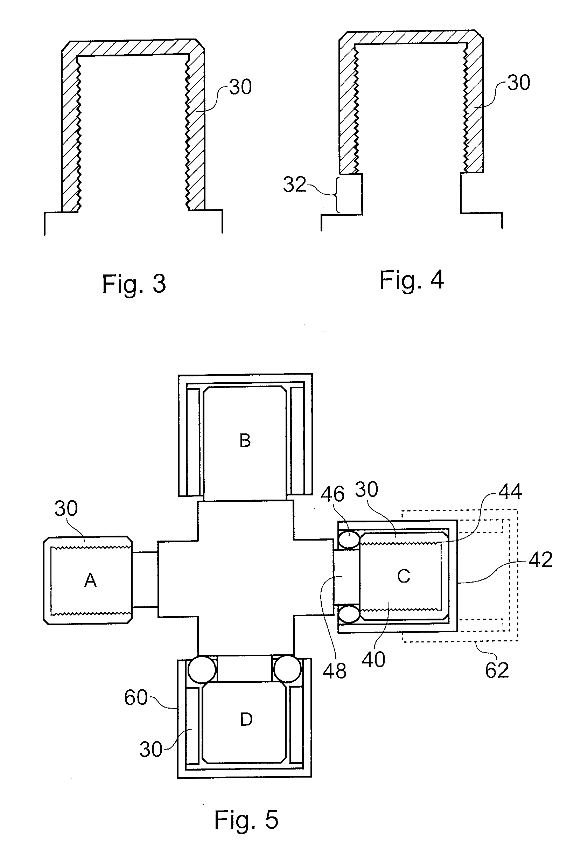

Each limb of the cruciform 20 may have a substantially cylindrical profile, as shown in Figure 3, or may have a seal groove 32 formed in the vicinity of the centre body of the cruciform, as shown in Figure 4.

Figure 5 schematically compares the present invention with prior art arrangements. Thus, for simplicity, the arms of the cruciform shown in Figure 5 have different bearing arrangements illustrated thereon. It should be appreciated that this is for illustrational purposes only, and in use, each of the arms of the cruciform is likely to have the same bearing arrangement formed thereon.

As shown in Figure 5, the first arm labelled A merely shows an embodiment of the present invention in which the arm has the bearing material 30 permanently affixed thereto. The arm C shown in Figure 5 schematically illustrates the bearing arrangement at its in-use position. Thus, an arm 40 having the bearing material 30 permanently bonded thereto extends within a bearing cap 42 within one of the 1st to 4th engagement regions defined by the attachment elements. The low friction material 30 extends along an end wall 44 of the arm 40 in order to provide a thrust surface. The bearing cap 42 is sealed by a ring seal 46 held within a seal groove 48. All relative rotational movement occurs at the interface between the radially outward surface of the bearing material 30 and the radially innermost surface of the bearing cap 42. Thus the cruciform element is both thermally insulated from the heat generated at this interface (by virtue of the low friction material 30) and also the heat generated by relative motion can be conducted to the bearing cap and dissipated.

Limbs B and D of Figure 5 schematically illustrate known bearing arrangements where the low friction material 30 is bonded to a bearing cap 60. The limbs B and D shown in Figure 5 are essentially identical, except for the fact that D has a end seal.

Figure 5 is drawn to scale, and it can be seen that for an equivalent interface area the bearing formed on limb C is smaller than that formed on limbs B and D. Indeed, the bearing cap of limb D is shown in dotted outline 62 on limb C by way of comparison.

It is thus clear that the present invention, whereby the low friction material is bonded to the cruciform element, confers many advantages. For example, the key between the low friction material and the substrate to which it is bonded is simplified because the material is now being applied to an external rather than an internal surface and thus it can be molded, sprayed or bonded to the external surface. The arrangement allows for a single piece cruciform bearing assembly including end face thrust bearings. The arrangement also provides for easier manufacturing of the bearing surfaces, as some composite or ceramic materials that may be used require specific machining operations that can be more reliably performed on an external surface than an internal surface. Similarly, the ease of machining allows tolerances to be better controlled.

As regards performance improvements, the present invention maximises the bearing area of the plastic rubbing face for a given size of bearing assembly. This in turn reduces stresses generated in the joint, reduces the overall size and weight cost of the joint, reduces wear and improves life and performance of the joint. Furthermore, as noted hereinbefore, the rubbing surface on the outside diameter of the low friction plastic allows better heat transfer away from the cruciform rubbing surfaces. This in effect allows increased power transmission capacity for a given joint size.

## Claims

1. A universal joint comprising:
a first attachment element (2) having first and second engagement regions (10, 12);
a second attachment element (4) having third and fourth engagement regions; and
a cruciform element (6) engaging with the first to fourth engagement regions,
**characterised in that** a bearing material (30) is fixed on the cruciform such that relative movement occurs at the interface between the radially outermost surface of the bearing material and the co-operating parts of the engagement regions.

2. A universal joint according to claim 1, wherein the cruciform element (6) comprises four arms (22, 24, 26, 28) and the bearing material (30) substantially fills the volume defined by an outer surface of one of the arms and an inner surface of a respective attachment region.

3. A universal joint according to claim 2, wherein the bearing material (30) extends over an end face of each arm (22, 24, 26, 28) of the cruciform element (6) thereby providing an end face thrust bearing.

4. A universal joint according to claim 2 or 3, wherein at least one of the arms (22, 24, 26, 28) of the cruciform (6) extends within a thermally conductive bearing cap (42).

5. A universal joint according to any one of claims 2 to 4, wherein at least one of the arms (22, 24, 26, 28) of the cruciform (6) has an annular seal groove (32) formed therein.

6. A universal joint according to claim 1, 2 or 3, wherein one or more of the first to fourth attachment regions comprise a bearing cap (42) that encloses the bearing material.

7. A universal joint according to any preceding claim, wherein the first and second engagement regions of the first attachment element (2) and the third and fourth engagement regions of the second attachment element (4) define respective axially aligned passages.

8. A universal joint according to any preceding claim, wherein the bearing material (30) comprises a solid low friction and/or low maintenance material.
